# EUROPEAN PATENT SPECIFICATION

(11) **EP 3 262 143 B1**
(45) Date of publication and mention of the grant of the patent: **21.04.2021**
(21) Application number: 16704865.1
(22) Date of filing: 18.02.2016
(51) Int. Cl.: C10M 133/12

(54) **USE OF A LUBRICATING COMPOSITION**
VERWENDUNG EINER SCHMIERMITTELZUSAMMENSETZUNG
UTILISATION D'UNE COMPOSITION LUBRIFIANTE

(30) Priority: 27.02.2015 EP 15157005
(43) Date of publication of application: 03.01.2018
(73) Proprietor: Shell Internationale Research Maatschappij B.V., 2596 HR The Hague (NL)
(72) Inventor: ORLEBAR, Caroline Nicola, Manchester M22 0RR (GB); MORGAN, Neal Matthew, Manchester M23 9AW (GB); SOUTHBY, Mark Clift, Chester Cheshire CH2 4NU (GB)
(74) Representative: Shell Legal Services IP
(86) International application number: PCT/EP2016/053443
(87) International publication number: WO 2016/135036

(56) References cited:
- WO-A1-2015/023559
- US-A- 2 881 061
- US-A1- 2006 025 313
- US-A1- 2014 165 942
- BROWN J E ET AL: "Mechanism of Aromatic Amine Antiknock Action", INDUSTRIAL AND ENGINEERING CHEMISTRY, AMERICAN CHEMICAL SOCIETY, US, 1 October 1955 (1955-10-01), pages 2141-2146, XP003014351,
- P. J. Shayler, L. D. Winborn, A. Scarisbrick: "Fuel Transport to the Crankcase, Oil Dilution and HC Return with Breather Flow During the Cold Operation of a SI Engine", SAE Technical Paper 2000-01-1235 , 3 June 2000 (2000-06-03), pages 1-10, XP002743025, ISSN: 0148-7191, DOI: 10.4271/2000-01-1235 Retrieved from the Internet: URL:http://digitallibrary.sae.org/content/ 2000-01-1235 [retrieved on 2015-08-04]

## Description

### Field of the Invention

The present invention relates to the use of an aromatic amine in a lubricating composition for providing spark timing advance of a spark-ignited internal combustion engine.

### Background of the Invention

Under ideal conditions, normal combustion in a conventional spark-ignition internal combustion engine occurs when a mixture of fuel and air is ignited within the combustion chamber inside the cylinder by the production of a spark originating from a spark plug. Such normal combustion is generally characterised by the expansion of the flame front across the combustion chamber in an orderly and controlled manner.

Ignition timing in a spark-ignition internal combustion engine is the process of setting the angle relative to piston position and crankshaft angular velocity that a spark will occur in the combustion chamber near the end of the compression stroke.

The engine needs to fire the spark in advance of top dead centre because fuel does not burn completely the instant the spark fires, the combustion gases take a period of time to expand, and the angular or rotational speed of the engine can lengthen or shorten the time frame in which the burning and expansion should occur. In a vast majority of cases, the angle will be described as a certain angle advanced before top dead centre (BTDC). Advancing the spark BTDC means that the spark is energised prior to the point where the combustion chamber reaches its minimum size, since the purpose of the power stroke in the engine is to force the combustion chamber to expand. Sparks occurring after top dead center (ATDC) are usually counter-productive (producing wasted spark, back-fire, engine knock, etc.) unless there is need for a supplemental or continuing spark prior to the exhaust stroke.

Setting the correct ignition timing is crucial in the performance of an engine. Sparks occurring too soon or too late in the engine cycle are responsible for excessive vibrations and even engine damage. The ignition timing affects many variables including engine longevity, fuel economy, and engine power. Modern engines that are controlled in real time by an engine control unit (ECU) use a computer to control the timing throughout the engine's RPM and load range.

There are many factors that influence proper ignition timing for a given engine. These include the timing of the intake valve(s) or fuel injector(s), the type of ignition system used, the type and condition of the spark plugs, the contents and impurities of the fuel, fuel temperature and pressure, engine speed and load, air and engine temperature, turbo boost pressure or intake air pressure, the components used in the ignition system, and the settings of the ignition system components. Usually, any major engine changes or upgrades will require a change to the ignition timing settings of the engine.

The present inventors have now found that by adding certain anti-knock additives to the sump, in particular by adding an aromatic amine selected from aniline and alkyl- substituted aniline compounds, 1,2,3,4-tetrahydroquinoline, diphenylamine and alkyl-substituted diphenylamine compounds, 2-ethylhexyl-4(dimethylamino)benzoate, indoline, N,N-dimethyl-1,4phenylenediamine, o-toluidine, p-toluidine, p-anisidine, p-phenetidine, and mixtures thereof, benefits can be achieved in terms of advanced spark timing.

WO2004/101717 relates to a lubricant composition for reducing the propensity of end gas knock in a flame propagation engine comprising a base oil and one or more additives that increases the octane of the composition. Examples of additives mentioned in WO2004/101717 which can be used as an octane booster include alcohols, ethers, esters and organometallic compounds. Aromatic amines are not mentioned in WO2004/101717 as octane boosters

WO2015/023559 discloses a method of increasing the ignition delay time of a base oil or a lubricant composition, the method comprising: providing the base oil or the lubricant composition having a first ignition delay time; adding an ignition delay additive to the base oil or the lubricant composition so as to form a second lubricant composition having a second ignition delay time, wherein the second ignition delay time is greater than the first ignition delay time.

### Summary of the Invention

According to a first aspect of the present invention there is provided the use of an aromatic amine in a lubricating composition for providing spark timing advance of a spark-ignited internal combustion engine wherein the lubricating composition comprises (i) base oil and (ii) from 3 to 20 wt% of the aromatic amine, wherein the aromatic amine is selected from aniline and alkyl- substituted aniline compounds, 1,2,3,4- tetrahydroquinoline, diphenylamine and alkyl-substituted diphenylamine compounds, 2-ethylhexyl-4(dimethylamino)benzoate, indoline, N,N-dimethyl-1,4phenylenediamine, o-toluidine, p-toluidine, p-anisidine, p-phenetidine, and mixtures thereof.

Further aspects of the present invention are described in the dependent claims.

### Detailed Description of the Invention

As used herein the term "spark timing" means the process of setting the angle relative to piston position and crankshaft angular velocity in a spark-ignition internal combustion engine so that a spark will occur in the combustion chamber near the end of the compression stroke.

As used herein the term "advancing the spark timing" means bringing the spark earlier than the current or base calibration for the particular speed/load conditions, while minimising the chance of, and preferably avoiding, knocking.

The methods and uses of lubricant compositions herein may be used to achieve any amount of advancement of the spark timing of the engine, while minimising the chance of, and preferably avoiding, knocking. It may be used for the purpose of achieving a desired target level of spark timing. The present invention preferably achieves a 0.1 CAD advancement or more in the spark timing of the engine, more preferably a 0.5 CAD advancement or more in the spark timing of the engine, even more preferably a 5 CAD advancement or more in the spark timing of the engine, and especially a 10 CAD advancement or more in the spark timing of the engine.

As used herein the term "fuel flow requirement" means the mass of fuel consumed by the spark-ignition internal combustion engine per hour in endeavouring to meet the demands of the driver.

As used herein the term "reducing the fuel flow requirement" means reducing the mass of fuel consumed by the spark-ignition internal combustion engine per hour in endeavouring to meet the demands of the driver. The methods, uses and lubricating compositions of the present invention provide the same power from less fuel due to the efficient way the engine is consuming the fuel.

The methods and uses of lubricating compositions of the present invention may be used to achieve any amount of reduction in the fuel flow requirement of the engine. The present invention may be used for the purpose of achieving a desired target level of fuel flow requirement. The methods and uses of lubricating compositions of the present invention preferably achieve a 0.5% reduction or more in the fuel flow requirement of the engine, more preferably a 1% reduction or more in the fuel flow requirement of the engine, even more preferably a 5% reduction or more in the fuel flow requirement of the engine, and especially a 10% reduction or more in the fuel flow requirement of the engine.

As used herein the term "brake specific fuel consumption" means the rate of fuel consumption divided by the power produced by the engine.

As used herein the term "reducing the brake specific fuel consumption" means reducing the rate of fuel consumption divided by the power produced by the engine.

The present invention may be used for the purpose of achieving a desired target level of brake specific fuel consumption. The use herein preferably achieves a 0.5% reduction or more in the brake specific fuel consumption of the engine, more preferably a 1% reduction or more in the brake specific fuel consumption of the engine, even more preferably a 5% reduction or more in the brake specific fuel consumption of the engine, and especially a 10% reduction or more in the brake specific fuel consumption of the engine.

A first essential component of the lubricating composition used in the present invention is an anti-knock additive. The anti-knock additive used in the present invention is an aromatic amine selected from aniline and alkyl-substituted aniline compounds, 1,2,3,4-tetrahydroquinoline, diphenylamine and alkyl-substituted diphenylamine compounds such as butyldiphenylamine, octyldiphenylamine and di-octyldiphenylamine, 2-ethylhexyl-4-(dimethylamino)benzoate, indoline, N,N-dimethyl-1,4-phenylenediamine, o-toluidine, p-toluidine, p-anisidine, p-phenetidine, and the like, and mixtures thereof.

Suitable alkyl-substituted aniline compounds for use herein include those compounds disclosed in WO2008/076759 incorporated herein by reference.

Suitable alkyl-substituted aniline compounds for use herein include those having the formula I below: 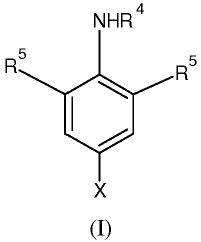 wherein X is selected from -OR¹ or -NR²R³, R¹ and R² are independently selected from methyl, ethyl, propyl, butyl and tertiary-butyl, R³ is selected from hydrogen, methyl, ethyl, propyl, butyl and tertiary-butyl, R⁴ is selected from hydrogen, methyl, ethyl and propyl, R⁵ is selected from hydrogen and C₁-C₄ straight or branched chain alkyl groups.

Examples of alkyl-substituted aniline compounds for use herein include *p*-methoxy aniline, *p*-N-methyl-1,4-diaminobenzene, *p*-ethoxy aniline, (bis-N,N'-methyl)-1-4-diaminobenzene, *p*-n-propoxy aniline, *p*-n-butoxy aniline, *p*-2-methyl-1-propoxy aniline, *p*-N-dimethyl aniline, *p*-N-diethyl aniline, *p*-N-1-dipropyl aniline, *p*-N-di-1-butyl aniline, *p*-N-di-2-methyl-1-propyl aniline, *p*-methoxy-2,6-dimethyl aniline, *p*-methoxy-2,6-diethyl aniline, *p-*methoxy-2,6-di-1-propyl aniline, *p*-methoxy-2,6-di-1-butyl aniline, *p*-methoxy-2,6-di-2-methyl-1-propyl aniline, *p-*ethoxy-2,6-dimethyl aniline, *p*-ethoxy-2,6-diethyl aniline, *p*-ethoxy-2,6-di-1-propyl aniline, *p*-ethoxy-2,6-di-1-butyl aniline, *p*-ethoxy-2,6-di-2-methyl-1-propyl aniline, *p*-N-dimethyl-N'-methyl aniline, *p*-N-diethyl-N'-ethyl aniline, *p*-N-dimethyl-2,6-dimethyl-N'-methyl aniline, *p*-N-dimethyl-2,6-diethyl-N'-methyl aniline, *p*-N-dimethyl-2,6-(1-propyl)-N'-methyl aniline, *p*-N-dimethyl-2,6-(1-butyl)-N'-methyl aniline, *p*-N-dimethyl-2,6-(2-methyl-1-propyl)-N'-methyl aniline, *p*-N-diethyl-2,6-dimethyl-N'-methyl aniline, *p*-N-diethyl-2,6-diethyl-N'-methyl aniline, *p*-N-diethyl-2,6-(1-propyl)-N'-methyl aniline, *p*-N-diethyl-2,6-(1-butyl)-N'-methyl aniline, *p*-N-diethyl-2,6-(2-methyl-1-propyl)-N'-methyl aniline, *p*-N-di-1-propyl-2,6-dimethyl-N'-methyl aniline, *p*-N-di-1-propyl-2,6-diethyl-N'-methyl aniline, *p*-N-di-1-propyl-2,6-(1-propyl)-N'-methyl aniline, *p*-N-di-1-propyl-2,6-(1-butyl)-N'-methyl aniline, *p*-N-di-1-propyl-2,6-(2-methyl-1-propyl)-N'-methyl aniline, butylaniline, and N-methyl aniline.

Preferred aromatic amines for use herein are selected from 1,2,3,4-tetrahydroquinoline, alkyl-substituted anilines, and mixtures thereof.

Particularly preferred aromatic amines for use herein are selected from 1,2,3,4-tetrahydroquinoline and N-methyl aniline, and mixtures thereof.

In one embodiment of the present invention, the aromatic amine is an alkyl-substituted aniline, preferably N-methyl aniline.

In another embodiment of the present invention, the aromatic amine is an 1,2,3,4-tetrahydroquinoline.

The anti-knock additive is present in the lubricating composition at a level of from 3 to 20 wt%, preferably from 5 to 20 wt%, more preferably from 5 to 15 wt%, even more preferably from 10 to 15 wt%, by weight of the lubricating composition.

The concentration of anti-knock additive referred to above means the concentration of anti-knock additive which is added into the lubricating composition as a blend with all the other components of the lubricating composition, and does not include the concentration of any other types of additives having an aromatic amine structure, for example anti-oxidant additives, which may already be present in the lubricating composition.

The lubricating composition further comprises base oil. There are no particular limitations regarding the base oil(s) used in lubricating composition according to the present invention, and various conventional mineral oils, synthetic oils as well as naturally derived esters such as vegetable oils may be conveniently used. Any base oil which belongs to Group I, Group II, Group III, Group IV, Group V and so on of the API (American Petroleum Institute) base oil categories, may be conveniently used. Furthermore, the base oil may conveniently comprise mixtures of one or more mineral oils and/or one or more synthetic oils; thus, the term "base oil" may refer to a mixture comprising more than one base oil.

Mineral oils include liquid petroleum oils and solvent-treated or acid-treated mineral lubricating oil of the paraffinic, naphthenic, or mixed paraffinic/naphthenic type which may be further refined by hydrofinishing processes and/or dewaxing.

Naphthenic base oils have low viscosity index (VI) (generally 40-80) and a low pour point. Such base oils are produced from feedstocks rich in naphthenes and low in wax content and are used mainly for lubricants in which colour and colour stability are important, and VI and oxidation stability are of secondary importance.

Paraffinic base oils have higher VI (generally >95) and a high pour point. Such base oils are produced from feedstocks rich in paraffins, and are used for lubricants in which VI and oxidation stability are important.

Synthetic oils include hydrocarbon oils such as olefin oligomers (including polyalphaolefin base oils; PAOs), Fischer-Tropsch derived base oils, dibasic acid esters, polyol esters, polyalkylene glycols (PAGs), alkyl naphthalenes and dewaxed waxy isomerates.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156 and WO 01/57166.

Typically, the aromatics content of a Fischer-Tropsch derived base oil, suitably determined by ASTM D 4629, will typically be below 1 wt%, preferably below 0.5 wt% and more preferably below 0.1 wt%. Suitably, the base oil has a total paraffin content of at least 80 wt%, preferably at least 85, more preferably at least 90, yet more preferably at least 95 and most preferably at least 99 wt%. It suitably has a saturates content (as measured by IP-368) of greater than 98 wt%. Preferably the saturates content of the base oil is greater than 99 wt%, more preferably greater than 99.5 wt%. It further preferably has a maximum n-paraffin content of 0.5 wt%. The base oil preferably also has a content of naphthenic compounds of from 0 to less than 20 wt%, more preferably of from 0.5 to 10 wt%.

Typically, the Fischer-Tropsch derived base oil or base oil blend has a kinematic viscosity at 100° C (as measured by ASTM D445) in the range of from 1 to 30 mm²/s (cSt), preferably from 1 to 25 mm²/s (cSt), and more preferably from 2 mm²/s to 12 mm²/s. Preferably, the Fischer-Tropsch derived base oil has a kinematic viscosity at 100° C (as measured by ASTM D445) of at least 2.5 mm²/s, more preferably at least 3.0 mm²/s. In one embodiment of the present invention, the Fischer-Tropsch derived base oil has a kinematic viscosity at 100° C of at most 5.0 mm²/s, preferably at most 4.5 mm²/s, more preferably at most 4.2 mm²/s (e.g. "GTL 4"). In another embodiment of the present invention, the Fischer-Tropsch derived base oil has a kinematic viscosity at 100° C of at most 8.5 mm²/s, preferably at most 8 mm²/s (e.g. "GTL 8").

Further, the Fischer-Tropsch derived base oil typically has a kinematic viscosity at 40° C (as measured by ASTM D445) of from 10 to 100 mm²/s (cSt), preferably from 15 to 50 mm²/s.

Also, the Fischer-Tropsch derived base oil preferably has a pour point (as measured according to ASTM D 5950) of -24° C or below, more preferably below-30° C, even more preferably below -40° C, and most preferably below -45° C.

The flash point (as measured by ASTM D92) of the Fischer-Tropsch derived base oil is preferably greater than 120° C, more preferably even greater than 140° C.

The Fischer-Tropsch derived base oil preferably has a viscosity index (according to ASTM D 2270) in the range of from 100 to 200. Preferably, the Fischer-Tropsch derived base oil has a viscosity index of at least 125, preferably 130. Also it is preferred that the viscosity index is below 180, preferably below 150.

In the event the Fischer-Tropsch derived base oil contains a blend of two or more Fischer-Tropsch derived base oils, the above values apply to the blend of the two or more Fischer-Tropsch derived base oils.

The lubricating oil composition described herein preferably comprises 80 wt% or greater of Fischer-Tropsch derived base oil.

Poly-alpha olefin base oils (PAOs) and their manufacture are well known in the art. Suitable poly-alpha olefin base oils that may be used include those derived from linear C₂ to C₃₂, preferably C₆ to C₁₆, alpha olefins. Particularly preferred feedstocks for said poly-alpha olefins are 1-octene, 1-decene, 1-dodecene and 1-tetradecene.

Preferably, the base oil comprises mineral oils and/or synthetic oils which contain more than 80 wt% of saturates, preferably more than 90 wt%, as measured according to ASTM D2007.

It is further preferred that the base oil contains less than 1.0 wt%, preferably less than 0.03 wt% of sulfur, calculated as elemental sulfur and measured according to ASTM D2622, ASTM D4294, ASTM D4927 or ASTM D3120.

Preferably, the viscosity index of the base oil is more than 80, more preferably more than 120, as measured according to ASTM D2270.

Preferably, the base oil preferably has a kinematic viscosity at 100° C of at least 2.5 mm²/s (according to ASTM D445), preferably at least 3 mm²/s. In some embodiments, the base oil has a kinematic viscosity at 100° C of between 3.0 and 4.5 mm²/s.

The total amount of base oil incorporated in the lubricant compositions is preferably in an amount in the range of from 60 to 99 wt%, more preferably in an amount in the range of from 65 to 90 wt% and most preferably in an amount in the range of from 75 to 88 wt%, with respect to the total weight of the lubricant composition.

### Performance Additives

Additionally, the lubricant compositions may further comprise one or more performance additives such as anti-oxidants, anti-wear additives, detergents, dispersants, friction modifiers, viscosity index improvers, pour point depressants, corrosion inhibitors, anti-foam agents, extreme pressure additives, metal passivators and seal fix/seal compatibility agents.

Examples of suitable anti-oxidants include, but are not limited to, aminic antioxidants, phenolic antioxidants, and mixtures thereof. Examples of aminic antioxidants which may be conveniently used include alkylated diphenylamines, phenyl-α-naphthylamines, phenyl-β-naphthylamines and alkylated α-naphthylamines.

Preferred aminic antioxidants include dialkyldiphenylamines such as p,p'-dioctyl-diphenylamine, p,p'-di-α-methylbenzyl-diphenylamine and N-p-butylphenyl-N-p'-octylphenylamine, monoalkyldiphenylamines such as mono-t-butyldiphenylamine and mono-octyldiphenylamine, bis(dialkylphenyl)amines such as di-(2,4-diethylphenyl)amine and di(2-ethyl-4-nonylphenyl)amine, alkylphenyl-1-naphthylamines such as octylphenyl-1-naphthylamine and n-t-dodecylphenyl-1-naphthylamine, 1-naphthylamine, arylnaphthylamines such as phenyl-1-naphthylamine, phenyl-2-naphthylamine, N-hexylphenyl-2-naphthylamine and N-octylphenyl-2-naphthylamine, phenylenediamines such as N,N'-diisopropyl-p-phenylenediamine and N,N'-diphenyl-p-phenylenediamine, and phenothiazines such as phenothiazine and 3,7-dioctylphenothiazine.

Preferred aminic antioxidants include those available under the following trade designations: "Sonoflex OD-3" (ex. Seiko Kagaku Co.), "Irganox L-57" (ex. Ciba Specialty Chemicals Co.) and phenothiazine (ex. Hodogaya Kagaku Co.) .

Examples of phenolic antioxidants which may be conveniently used include C₇-C₉ branched alkyl esters of 3,5-bis(1,1-dimethyl-ethyl)-4-hydroxy-benzenepropanoic acid, 2-t-butylphenol, 2-t-butyl-4-methylphenol, 2-t-butyl-5-methylphenol, 2,4-di-t-butylphenol, 2,4-dimethyl-6-t-butylphenol, 2-t-butyl-4-methoxyphenol, 3-t-butyl-4-methoxyphenol, 2,5-di-t-butylhydroquinone, 2,6-di-t-butyl-4-alkylphenols such as 2,6-di-t-butylphenol, 2,6-di-t-butyl-4-methylphenol and 2,6-di-t-butyl-4-ethylphenol, 2,6-di-t-butyl-4-alkoxyphenols such as 2,6-di-t-butyl-4-methoxyphenol and 2,6-di-t-butyl-4-ethoxyphenol, 3,5-di-t-butyl-4-hydroxybenzylmercaptooctylacetate, alkyl-3-(3,5-di-t-butyl-4-hydroxyphenyl)propionates such as n-octadecyl-3-(3,5-di-t-butyl-4-hydroxyphenyl)propionate, n-butyl-3-(3,5-di-t-butyl-4-hydroxyphenyl)propionate and 2'-ethylhexyl-3-(3,5-di-t-butyl-4-hydroxyphenyl)propionate, 2,6-d-t-butyl-α-dimethylamino-p-cresol, 2,2'-methylene-bis(4-alkyl-6-t-butylphenol) such as 2,2'-methylenebis(4-methyl-6-t-butylphenol, and 2,2-methylenebis(4-ethyl-6-t-butylphenol), bisphenols such as 4,4'-butylidenebis(3-methyl-6-t-butylphenol, 4,4'-methylenebis(2,6-di-t-butylphenol), 4,4'-bis(2,6-di-t-butylphenol), 2,2-(di-p-hydroxyphenyl)propane, 2,2-bis(3,5-di-t-butyl-4-hydroxyphenyl)propane, 4,4'-cyclohexylidenebis(2,6-t-butylphenol), hexamethyleneglycol-bis[3-(3,5-di-t-butyl-4-hydroxyphenyl)propionate], triethyleneglycolbis[3-(3-t-butyl-4-hydroxy-5-methylphenyl)propionate], 2,2'-thio-[diethyl-3-(3,5-di-t-butyl-4-hydroxyphenyl)propionate], 3,9-bis{1,1-dimethyl-2-[3-(3-t-butyl-4-hydroxy-5-methylphenyl)propionyloxy]ethyl}2,4,8,10-tetraoxaspiro[5,5]undecane, 4,4'-thiobis(3-methyl-6-t-butylphenol) and 2,2'-thiobis(4,6-di-t-butylresorcinol), polyphenols such as tetrakis[methylene-3-(3,5-di-t-butyl-4-hydroxyphenyl)propionate]methane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, bis-[3,3'-bis(4'-hydroxy-3'-t-butylphenyl)butyric acid]glycol ester, 2-(3',5'-di-t-butyl-4-hydroxyphenyl)methyl-4-(2",4"-di-t-butyl-3"-hydroxyphenyl)methyl-6-t-butylphenol and 2,6-bis(2'-hydroxy-3'-t-butyl-5'-methylbenzyl)-4-methylphenol, and p-t-butylphenol - formaldehyde condensates and p-t-butylphenol - acetaldehyde condensates.

Examples of suitable phenolic antioxidants include those which are commercially available under the following trade designations: "Irganox L-135" (ex. Ciba Specialty Chemicals Co.), "Yoshinox SS" (ex. Yoshitomi Seiyaku Co.), "Antage W-400" (ex. Kawaguchi Kagaku Co.), "Antage W-500" (ex. Kawaguchi Kagaku Co.), "Antage W-300" (ex. Kawaguchi Kagaku Co.), "Irganox L109" (ex. Ciba Speciality Chemicals Co.), "Tominox 917" (ex. Yoshitomi Seiyaku Co.), "Irganox L115" (ex. Ciba Speciality Chemicals Co.), "Sumilizer GA80" (ex. Sumitomo Kagaku), "Antage RC" (ex. Kawaguchi Kagaku Co.), "Irganox L101" (ex. Ciba Speciality Chemicals Co.), "Yoshinox 930" (ex. Yoshitomi Seiyaku Co.).

In a preferred embodiment, antioxidants are present in an amount in the range of from 0.1 to 5.0 wt%, more preferably in an amount in the range of from 0.3 to 3.0 wt%, and most preferably in an amount in the range of from 0.5 to 1.5 wt%, based on the total weight of the lubricant composition.

Anti-wear additives that may be conveniently used include zinc-containing compounds such as zinc dithiophosphate compounds selected from zinc dialkyl-, diaryl- and/or alkylaryl- dithiophosphates, molybdenum-containing compounds, boron-containing compounds and ashless anti-wear additives such as substituted or unsubstituted thiophosphoric acids, and salts thereof.

Zinc dithiophosphate is a well known additive in the art and may be conveniently represented by general formula II: 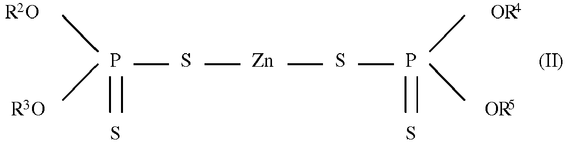 wherein R² to R⁵ may be the same or different and are each a primary alkyl group containing from 1 to 20 carbon atoms preferably from 3 to 12 carbon atoms, a secondary alkyl group containing from 3 to 20 carbon atoms, preferably from 3 to 12 carbon atoms, an aryl group or an aryl group substituted with an alkyl group, said alkyl substituent containing from 1 to 20 carbon atoms preferably 3 to 18 carbon atoms.

Zinc dithiophosphate compounds in which R² to R⁵ are all different from each other can be used alone or in admixture with zinc dithiophosphate compounds in which R² to R⁵ are all the same.

Examples of suitable zinc dithiophosphates include those which are commercially available under the following trade designations: "Lz 1097", "Lz 1395", "Lz 677A", "Lz 1095", "Lz 1370", "Lz 1371", and "Lz 1373" (ex. Lubrizol Corporation); "OLOA 267", "OLOA 269R", "OLOA 260" and "OLOA 262" (ex. Chevron Oronite); and "HITEC 7197" and "HITEC 7169" (ex. Afton Chemical).

Examples of molybdenum-containing compounds may conveniently include molybdenum dithiocarbamates, trinuclear molybdenum compounds, for example as described in WO 98/26030, sulphides of molybdenum and molybdenum dithiophosphate.

Boron-containing compounds that may be conveniently used include borate esters, borated fatty amines, borated epoxides, alkali metal (or mixed alkali metal or alkaline earth metal) borates and borated overbased metal salts.

The lubricant compositions may generally comprise in the range of from 0.4 to 1.2 wt% of an anti-wear additive, based on the total weight of the lubricant composition.

Typical detergents that may be used in the lubricating compositions include one or more salicylate and/or phenate and/or sulphonate detergents.

However, as metal organic and inorganic base salts which are used as detergents can contribute to the sulfated ash content of a lubricant composition, in a preferred embodiment, the amounts of such additives are minimised. Furthermore, in order to maintain a low sulphur level, salicylate detergents are preferred.

In order to maintain the total sulfated ash content of the lubricant composition at a level of preferably not greater than 2.0 wt%, more preferably at a level of not greater than 1.0 wt% and most preferably at a level of not greater than 0.8 wt%, based on the total weight of the lubricant composition, said detergents are preferably used in amounts in the range of 0.05 to 20.0 wt%, more preferably from 1.0 to 10.0 wt% and most preferably in the range of from 2.0 to 5.0 wt%, based on the total weight of the lubricant composition.

Furthermore, the detergents may independently have a TBN (total base number) value in the range of from 10 to 500 mg.KOH/g, more preferably in the range of from 30 to 350 mg.KOH/g and most preferably in the range of from 50 to 300 mg.KOH/g, as measured by ISO 3771.

The lubricant compositions may additionally contain an ash-free dispersant which is preferably admixed in an amount in the range of from 5 to 15 wt%, based on the total weight of the lubricant composition.

Examples of ash-free dispersants which may be used include the polyalkenyl succinimides and polyalkenyl succininic acid esters disclosed in Japanese Patent Nos. 1367796, 1667140, 1302811 and 1743435. Preferred dispersants include borated succinimides.

Examples of viscosity index improvers which may be conveniently used in the lubricant compositions include the styrene-butadiene copolymers, styrene-isoprene stellate copolymers and the polymethacrylate copolymer and ethylene-propylene copolymers. Such viscosity index improvers may be conveniently employed in an amount in the range of from 1 to 20 wt%, based on the total weight of the lubricant composition.

Polymethacrylates may be conveniently employed in the lubricant compositions as effective pour point depressants. For corrosion inhibitors, it is possible to use alkenyl succinic acid or ester moieties thereof, benzotriazole-based compounds and thiodiazole-based compounds.

Compounds such as polysiloxanes, dimethyl polycyclohexane and polyacrylates may be conveniently used in the lubricant compositions as anti-foam agents.

Compounds which may be conveniently used in the lubricant compositions as seal fix or seal compatibility agents include, for example, commercially available aromatic esters.

The lubricant compositions may be conveniently prepared using conventional formulation techniques by admixing one or more base oils with one or more performance additives.

The present invention also relates to a method for advancing the spark timing of a spark-ignition internal combustion engine, the method comprising lubricating the spark-ignition internal combustion engine with a lubricating composition comprising base oil and anti-knock additive, wherein the anti-knock additive is an aromatic amine. The advancement of spark timing provides benefits in terms of reduced fuel flow requirement of the engine and reduced brake specific fuel consumption of the engine.

The present invention further relates to a method for advancing the spark timing of a spark-ignition internal combustion engine, the method comprising lubricating the engine with a lubricating composition, wherein the method further comprises a step of adding an anti-knock additive to the lubricating composition, wherein the anti-knock additive is an aromatic amine.

In one embodiment of the present invention, the step of adding an anti-knock additive to the lubricating composition is achieved via transfer from the fuel composition. Hence, in such an embodiment the step of adding an anti-knock additive to the lubricating composition comprises the steps of (i) fuelling the spark-ignition internal combustion engine with a fuel composition comprising a base fuel and an anti-knock additive, wherein the anti-knock additive is an aromatic amine, and (ii) transfer of anti-knock additive during operation of the engine from the fuel composition to the lubricating composition.

Transfer of anti-knock additive from the fuel composition to the lubricating composition in the sump can occur, for example, via one or more of the following possible mechanisms: entrainment in blowby flow; evaporation from liner and piston; valve guide leakage; leakage from turbocharger oil seals; and/or oil loss via piston ring (see SAE paper SAE 2012-01-1617 by Arnault/Bonne, "Engine Lube-Oil Consumption Takes and Benefits from Significant Blow-by Oil Mist Reduction"). Transfer of anti-knock additive from the fuel composition to the lubricating composition in the sump has the advantage that the lubricating composition can be constantly topped up with anti-knock additive. This is especially useful since the anti-knock additive may have a tendency to degrade during use and/or be combusted.

In another embodiment, the step of adding an anti-knock additive to the lubricating composition is achieved via addition of the anti-knock additive directly to the lubricating composition (i.e. not via transfer from the fuel composition), for example by adding the anti-knock additive during manufacture of the lubricating composition, or by adding the anti-knock additive directly to the lubricating composition in the sump.

### Fuel Composition

The fuel compositions used in the present invention are liquid fuel compositions, preferably gasoline fuel compositions comprising a gasoline base fuel.

In one embodiment of the present invention, as mentioned above, the anti-knock additive is included as an additive in the fuel composition, and transferred from the fuel composition to the lubricating composition during operation of the engine. In this embodiment, the anti-knock additive is present in the fuel composition so as to provide a certain level of anti-knock additive in the lubricant.

In one embodiment of the present invention, the anti-knock additive is present in the fuel composition in an amount so as to provide a level of anti-knock additive in the lubricating composition of preferably from 3 to 20 wt%, more preferably from 5 to 20 wt%, even more preferably from 5 to 15 wt%, and especially from 10 to 15 wt%, by weight of the lubricating composition.

The anti-knock additive is present in the fuel composition preferably at a level of from 0.0005 to 5 vol%, more preferably at a level of from 0.005 to 5 vol%, even more preferably at a level of from 0.005 to 0.5 vol% and especially at a level of from 0.05 to 0.5 vol%.

The gasoline used as the gasoline base fuel may be any gasoline suitable for use in an internal combustion engine of the spark-ignition (petrol) type known in the art, including automotive engines as well as in other types of engine such as, for example, off-road and aviation engines. The gasoline used as the base fuel in the liquid fuel composition used herein may conveniently also be referred to as 'base gasoline'.

The gasoline base fuel may itself comprise a mixture of two or more different gasoline fuel components, and/or be additivated as described below.

Conventionally gasoline base fuels are present in a gasoline or liquid fuel composition in a major amount, for example greater than 50 wt% of the liquid fuel composition, and may be present in an amount of up to 90 wt%, or 95 wt%, or 99 wt%, or 99.9 wt%, or 99.99 wt%, or 99.999 wt%. Suitable the liquid fuel composition contains or consists essentially of the gasoline base fuel, and optionally one or more conventional gasoline fuel additives, such as specified hereinafter.

Gasolines typically comprise mixtures of hydrocarbons boiling in the range from 25 to 230° C (EN-ISO 3405), the optimal ranges and distillation curves typically varying according to climate and season of the year. The hydrocarbons in a gasoline may be derived by any means known in the art, conveniently the hydrocarbons may be derived in any known manner from straight-run gasoline, synthetically-produced aromatic hydrocarbon mixtures, thermally or catalytically cracked hydrocarbons, hydro-cracked petroleum fractions, catalytically reformed hydrocarbons or mixtures of these.

The specific distillation curve, hydrocarbon composition, research octane number (RON) and motor octane number (MON) of the gasoline are not critical.

Conveniently, the research octane number (RON) of the gasoline base fuel may be at least 80, for instance in the range of from 80 to 130. Typically, the RON of the gasoline base fuel will be at least 90, for instance in the range of from 90 to 120. Typically, the RON of the gasoline base fuel will be at least 91, for instance in the range of from 91 to 115 (EN 25164). The motor octane number (MON) of the gasoline may conveniently be at least 70, for instance in the range of from 70 to 110. Typically, the MON of the gasoline will be at least 75, for instance in the range of from 75 to 105, (EN 25163).

The liquid fuel composition used in the present invention has a Research Octane Number (RON) of 95 or less, preferably of 93 or less, more preferably 92 or less, even more preferably 90 or less. The liquid fuel composition used in the present invention has a Motor Octane Number in the range of from 75 to 90.

Typically, gasolines comprise components selected from one or more of the following groups; saturated hydrocarbons, olefinic hydrocarbons, aromatic hydrocarbons, and oxygenated hydrocarbons. Conveniently, the gasoline may comprise a mixture of saturated hydrocarbons, olefinic hydrocarbons, aromatic hydrocarbons, and, optionally, oxygenated hydrocarbons.

Typically, the olefinic hydrocarbon content of the gasoline is in the range of from 0 to 40 percent by volume based on the gasoline (ASTM D1319); preferably, the olefinic hydrocarbon content of the gasoline is in the range of from 0 to 30 percent by volume based on the gasoline, more preferably, the olefinic hydrocarbon content of the gasoline is in the range of from 0 to 20 percent by volume based on the gasoline.

Typically, the aromatic hydrocarbon content of the gasoline is in the range of from 0 to 70 percent by volume based on the gasoline (ASTM D1319), for instance the aromatic hydrocarbon content of the gasoline is in the range of from 10 to 60 percent by volume based on the gasoline; preferably, the aromatic hydrocarbon content of the gasoline is in the range of from 0 to 50 percent by volume based on the gasoline, for instance the aromatic hydrocarbon content of the gasoline is in the range of from 10 to 50 percent by volume based on the gasoline.

The benzene content of the gasoline is at most 10 percent by volume, more preferably at most 5 percent by volume, especially at most 1 percent by volume based on the gasoline.

The gasoline preferably has a low or ultra low sulphur content, for instance at most 1000 ppmw (parts per million by weight), preferably no more than 500 ppmw, more preferably no more than 100, even more preferably no more than 50 and most preferably no more than even 10 ppmw.

The gasoline also preferably has a low total lead content, such as at most 0.005 g/l, most preferably being lead free - having no lead compounds added thereto (i.e. unleaded).

When the gasoline comprises oxygenated hydrocarbons, at least a portion of non-oxygenated hydrocarbons will be substituted for oxygenated hydrocarbons. The oxygen content of the gasoline may be up to 35 wt% (EN 1601) (e.g. ethanol per se) based on the gasoline. For example, the oxygen content of the gasoline may be up to 25 wt%, preferably up to 10 wt%. Conveniently, the oxygenate concentration will have a minimum concentration selected from any one of 0, 0.2, 0.4, 0.6, 0.8, 1.0, and 1.2 wt%, and a maximum concentration selected from any one of 5, 4.5, 4.0, 3.5, 3.0, and 2.7 wt%.

Examples of oxygenated hydrocarbons that may be incorporated into the gasoline include alcohols, ethers, esters, ketones, aldehydes, carboxylic acids and their derivatives, and oxygen containing heterocyclic compounds. Preferably, the oxygenated hydrocarbons that may be incorporated into the gasoline are selected from alcohols (such as methanol, ethanol, propanol, 2-propanol, butanol, tert-butanol, iso-butanol and 2-butanol), ethers (preferably ethers containing 5 or more carbon atoms per molecule, e.g., methyl tert-butyl ether and ethyl tert-butyl ether) and esters (preferably esters containing 5 or more carbon atoms per molecule); a particularly preferred oxygenated hydrocarbon is ethanol.

When oxygenated hydrocarbons are present in the gasoline, the amount of oxygenated hydrocarbons in the gasoline may vary over a wide range. For example, gasolines comprising a major proportion of oxygenated hydrocarbons are currently commercially available in countries such as Brazil and U.S.A., e.g. ethanol per se and E85, as well as gasolines comprising a minor proportion of oxygenated hydrocarbons, e.g. E10 and E5. Therefore, the gasoline may contain up to 100 percent by volume oxygenated hydrocarbons. E100 fuels as used in Brazil are also included herein. Preferably, the amount of oxygenated hydrocarbons present in the gasoline is selected from one of the following amounts: up to 85 percent by volume; up to 70 percent by volume; up to 65 percent by volume; up to 30 percent by volume; up to 20 percent by volume; up to 15 percent by volume; and, up to 10 percent by volume, depending upon the desired final formulation of the gasoline. Conveniently, the gasoline may contain at least 0.5, 1.0 or 2.0 percent by volume oxygenated hydrocarbons.

Examples of suitable gasolines include gasolines which have an olefinic hydrocarbon content of from 0 to 20 percent by volume (ASTM D1319), an oxygen content of from 0 to 5 wt% (EN 1601), an aromatic hydrocarbon content of from 0 to 50 percent by volume (ASTM D1319) and a benzene content of at most 1 percent by volume.

Also suitable for use herein are gasoline blending components which can be derived from a biological source. Examples of such gasoline blending components can be found in WO2009/077606, WO2010/028206, WO2010/000761, European patent application nos. 09160983.4, 09176879.6, 09180904.6, and US patent application serial no. 61/312307.

Whilst not critical to the present invention, the base gasoline or the gasoline composition of the present invention may conveniently include one or more optional fuel additives. The concentration and nature of the optional fuel additive(s) that may be included in the base gasoline or the gasoline composition of the present invention is not critical. Non-limiting examples of suitable types of fuel additives that can be included in the base gasoline or the gasoline composition of the present invention include anti-oxidants, corrosion inhibitors, detergents, dehazers, antiknock additives, metal deactivators, valve-seat recession protectant compounds, dyes, solvents, carrier fluids, diluents and markers. Examples of suitable such additives are described generally in US Patent No. 5,855,629.

Conveniently, the fuel additives can be blended with one or more solvents to form an additive concentrate, the additive concentrate can then be admixed with the base gasoline or the gasoline composition of the present invention.

The (active matter) concentration of any optional additives present in the base gasoline or the gasoline composition of the present invention is preferably up to 1 wt%, more preferably in the range from 5 to 2000 ppmw, advantageously in the range of from 300 to 1500 ppmw, such as from 300 to 1000 ppmw.

As stated above, the gasoline composition may also contain synthetic or mineral carrier oils and/or solvents.

Examples of suitable mineral carrier oils are fractions obtained in crude oil processing, such as brightstock or base oils having viscosities, for example, from the SN 500 - 2000 class; and also aromatic hydrocarbons, paraffinic hydrocarbons and alkoxyalkanols. Also useful as a mineral carrier oil is a fraction which is obtained in the refining of mineral oil and is known as "hydrocrack oil" (vacuum distillate cut having a boiling range of from about 360 to 500° C, obtainable from natural mineral oil which has been catalytically hydrogenated under high pressure and isomerised and also deparaffinised).

Examples of suitable synthetic carrier oils are: polyolefins (poly-alpha-olefins or poly (internal olefin)s), (poly)esters, (poly)alkoxylates, polyethers, aliphatic polyether amines, alkylphenol-started polyethers, alkylphenol-started polyether amines and carboxylic esters of long-chain alkanols.

Examples of suitable polyolefins are olefin polymers, in particular based on polybutene or polyisobutene (hydrogenated or nonhydrogenated).

Examples of suitable polyethers or polyetheramines are preferably compounds comprising polyoxy-C₂-C₄-alkylene moieties which are obtainable by reacting C₂-C₆₀-alkanols, C₆-C₃₀-alkanediols, mono- or di-C₂-C₃₀-alkylamines, C₁-C₃₀-alkylcyclohexanols or C₁-C₃₀-alkylphenols with from 1 to 30 mol of ethylene oxide and/or propylene oxide and/or butylene oxide per hydroxyl group or amino group, and, in the case of the polyether amines, by subsequent reductive amination with ammonia, monoamines or polyamines. Such products are described in particular in EP-A-310 875, EP-A-356 725, EP-A-700 985 and US-A-4,877,416. For example, the polyether amines used may be poly-C₂-C₆-alkylene oxide amines or functional derivatives thereof. Typical examples thereof are tridecanol butoxylates or isotridecanol butoxylates, isononylphenol butoxylates and also polyisobutenol butoxylates and propoxylates, and also the corresponding reaction products with ammonia.

Examples of carboxylic esters of long-chain alkanols are in particular esters of mono-, di- or tricarboxylic acids with long-chain alkanols or polyols, as described in particular in DE-A-38 38 918. The mono-, di- or tricarboxylic acids used may be aliphatic or aromatic acids; suitable ester alcohols or polyols are in particular long-chain representatives having, for example, from 6 to 24 carbon atoms. Typical representatives of the esters are adipates, phthalates, isophthalates, terephthalates and trimellitates of isooctanol, isononanol, isodecanol and isotridecanol, for example di-(n- or isotridecyl) phthalate.

Further suitable carrier oil systems are described, for example, in DE-A-38 26 608, DE-A-41 42 241, DE-A-43 09 074, EP-A-0 452 328 and EP-A-0 548 617, which are incorporated herein by way of reference.

Examples of particularly suitable synthetic carrier oils are alcohol-started polyethers having from about 5 to 35, for example from about 5 to 30, C₃-C₆-alkylene oxide units, for example selected from propylene oxide, n-butylene oxide and isobutylene oxide units, or mixtures thereof. Non-limiting examples of suitable starter alcohols are long-chain alkanols or phenols substituted by long-chain alkyl in which the long-chain alkyl radical is in particular a straight-chain or branched C₆-C₁₈-alkyl radical. Preferred examples include tridecanol and nonylphenol.

Further suitable synthetic carrier oils are alkoxylated alkylphenols, as described in DE-A-10 102 913.6.

Mixtures of mineral carrier oils, synthetic carrier oils, and mineral and synthetic carrier oils may also be used.

Any solvent and optionally co-solvent suitable for use in fuels may be used. Examples of suitable solvents for use in fuels include: non-polar hydrocarbon solvents such as kerosene, heavy aromatic solvent ("solvent naphtha heavy", "Solvesso 150"), toluene, xylene, paraffins, petroleum, white spirits, those sold by Shell companies under the trademark "SHELLSOL", and the like. Examples of suitable co-solvents include: polar solvents such as esters and, in particular, alcohols (e.g. t-butanol, i-butanol, hexanol, 2-ethylhexanol, 2-propyl heptanol, decanol, isotridecanol, butyl glycols, and alcohol mixtures such as those sold by Shell companies under the trade mark "LINEVOL", especially LINEVOL 79 alcohol which is a mixture of C₇-₉ primary alcohols, or a C₁₂-₁₄ alcohol mixture which is commercially available).

Dehazers/demulsifiers suitable for use in liquid fuels are well known in the art. Non-limiting examples include glycol oxyalkylate polyol blends (such as sold under the trade designation TOLAD™ 9312), alkoxylated phenol formaldehyde polymers, phenol/formaldehyde or C₁-₁₈ alkylphenol/-formaldehyde resin oxyalkylates modified by oxyalkylation with C₁-1₈ epoxides and diepoxides (such as sold under the trade designation TOLAD™ 9308), and C₁-₄ epoxide copolymers cross-linked with diepoxides, diacids, diesters, diols, diacrylates, dimethacrylates or diisocyanates, and blends thereof. The glycol oxyalkylate polyol blends may be polyols oxyalkylated with C₁-₄ epoxides. The C₁-₁₈ alkylphenol phenol/-formaldehyde resin oxyalkylates modified by oxyalkylation with C₁-₁₈ epoxides and diepoxides may be based on, for example, cresol, t-butyl phenol, dodecyl phenol or dinonyl phenol, or a mixture of phenols (such as a mixture of t-butyl phenol and nonyl phenol). The dehazer should be used in an amount sufficient to inhibit the hazing that might otherwise occur when the gasoline without the dehazer contacts water, and this amount will be referred to herein as a "haze-inhibiting amount." Generally, this amount is from about 0.1 to about 20 ppmw(e.g. from about 0.1 to about 10 ppm), more preferably from 1 to 15 ppmw, still more preferably from 1 to 10 ppmw, advantageously from 1 to 5 ppmw based on the weight of the gasoline.

Further customary additives for use in gasolines are corrosion inhibitors, for example based on ammonium salts of organic carboxylic acids, said salts tending to form films, or of heterocyclic aromatics for nonferrous metal corrosion protection; antioxidants or stabilisers, for example based on amines such as phenyldiamines, e.g. p-phenylenediamine, N,N'-di-sec-butyl-p-phenyldiamine, dicyclohexylamine or derivatives thereof or of phenols such as 2,4-di-tert-butylphenol or 3,5-di-tert-butyl-4-hydroxy-phenylpropionic acid; anti-static agents; metallocenes such as ferrocene; methylcyclo-pentadienylmanganese tricarbonyl; lubricity additives, such as certain fatty acids, alkenylsuccinic esters, bis(hydroxyalkyl) fatty amines, hydroxyacetamides or castor oil; organic sunscreens or UV filter compounds; and also dyes (markers). Amines may also be added, if appropriate, for example as described in WO 03/076554. Optionally anti valve seat recession additives may be used such as sodium or potassium salts of polymeric organic acids.

The gasoline compositions herein can also comprise a detergent additive. Suitable detergent additives include those disclosed in WO2009/50287, incorporated herein by reference.

In the above, amounts (concentrations, % vol, ppmw, wt%) of components are of active matter, i.e. exclusive of volatile solvents/diluent materials.

The invention is further described by reference to the following non-limiting examples.

### Examples

The lubricant composition used as a reference oil (Comparative Example 1) in the following set of experiments was a commercially available 5W-30 oil meeting ILSAC GF-5 specification.

Comparative Example 2 consisted of the same oil used in Comparative Example 1 with the addition of a solubilising agent, Priolube 1940, commercially available from Croda. Priolube 1940 does not give any octane boost itself.

Example 1 consisted of the same reference oil used in Comparative Example 1 with the addition of anti-knock additive 1,2,3,4-tetrahydroquinoline (THQ) (commercially available from Sigma Aldrich) dissolved in Priolube 1940. 742 g of THQ was dissolved in 1.5 litres of Priolube 1940. This was added to the oil of Comparative Example 1 so as to provide a concentration of anti-knock additive in the sump of approximately 10 wt% (assuming the sump is 8 litres) .

Example 2 consisted of the same reference oil used in Comparative Example 1 with the addition of anti-knock additive N-methyl aniline, commercially available from Sigma Aldrich) dissolved in Priolube 1940. 742 g of N-methyl aniline (750 ml) was dissolved in 1.5 litres of Priolube 1940 (50 wt%). This was added to the reference oil of Comparative Example 1 so as to provide a concentration of anti-knock additive in the sump of approximately 10 wt% (assuming the sump volume is 8 litres).

The fuel used in the following experiments was an AKI 87 E10 fuel having the properties detailed in Table 1 below.

**Table 1 - Properties of Fuel**

| Property | Test Method | Unit s | Result |
|---|---|---|---|
| RVP | ASTM D-5191 | kPa | 48.13 |
| Aromatic | ASTM D-1319 | % | 19.2 |
| Olefins | ASTM D-1319 | % | 11 |
| Saturate | ASTM D-1319 | % | 69.8 |
| Gross heating value | | MJ/k g | 44.757 |
| RON | ASTM D-2699 | | 91.4 |
| MON | ASTM D-2700 | | 82.9 |
| AKI | | | 87.1 |
| Unwashed Gum | ASTM D-381 | | 16 |
| Washed Gum | ASTM D-381 | | <0.5 mg/100 mL |
| Specific Gravity @15° C | ASTM D-4052 | g/ml | 0.7428 |
| Density at 15° C | | g/ml | 0.7426 |
| Carbon | ASTM D-5291 | wt% | 82.46 |
| Hydrogen | ASTM D-5291 | wt% | 13.98 |
| Sulphur | ASTM D-5433 | mg/k g | 14.9 |
| EtOH | ASTM D-5599 | vol% | 9.688 |
| Water | | % | 0.13414 |
| IBP | ASTM D-86 | ° C | 39.4 |
| Evap_5 | | ° C | 54.4 |
| Evap_10 | | ° C | 57.9 |
| Evap_15 | | ° C | 60.2 |
| Evap_20 | | ° C | 62.5 |
| Evap_30 | | ° C | 66.3 |
| Evap_4 0 | | ° C | 74.4 |
| Evap_50 | | ° C | 101.7 |
| Evap_60 | | ° C | 114.2 |
| Evap_70 | | ° C | 125.9 |
| Evap_80 | | ° C | 142.2 |
| Evap_90 | | ° C | 167.2 |
| Evap_95 | | ° C | 184.4 |
| FBP | | ° C | 207.2 |
| Recovered | | mL | 97.8 |
| Residue | | mL | 1.3 |
| Loss | | mL | 0.9 |

The engine used in the following experiments was a Ford EcoBoost 3.5 L, V6 turbocharged direct injection spark ignition engine installed with a development engine control unit (ECU) with production engine calibration. Table 2 below shows an overview of the test procedure that was used in the experiments.

**Table 2 Test Procedure**

| Part | Stage | Activity | Duration (min) | Culmination (min) |
|---|---|---|---|---|
| 1. | Preparation | If it is not still warm from the over-night de-greening procedure, the vehicle is warmed up | 20 | 20 |
| 2. | Fuel fill | Fuel tank is topped up with fuel | 10 | 30 |
| 3. | Lube fill | Sump is emptied with three flushes and refilled with fresh baseline lubricant (Comparative Example 1) | 40 | 70 |
| 4. | Stabilisation , first half (Stage 1a) | Test Protocol (Table 3) is followed | 20 | 90 |
| 5. | Pause in stabilisation | Engine is turned off | 10 | 100 |
| 6. | Stabilisation , second half (Stage 1b) | Test Protocol (Table 3) is followed | 20 | 120 |
| 7. | Fuel exchange | Engine is turned off, leaving oil to cool for 15 min, two litres of used reference oil (Comparative Example 1) are removed from the oil drain plug and replaced with a blend of one and a half litres of test lubricant (Comparative Examples 1 and 2 and Examples 1-2) and half a litre of recovered used reference oil (Comparative Example 1) | 40 | 160 |
| 8. | Test, first half (Stage 2a) | Engine is turned off | 30 | 190 |
| 9. | Pause in test | Engine is turned off | 20 | 210 |
| 10. | Test, second half (Stage 2b) | Test Protocol (Table 3) is followed whilst taking measurements | 30 | 240 |

**Table 3 Test Protocol**

| Test Step | Engine Speed (rpm) | BMEP (bar) | Time (min) |
|---|---|---|---|
| 1 | 1500 | 4 | 1 |
| 2 | 1500 | 12 | 3 |
| 3 | 2000 | 16 | 3 |
| 4 | 3000 | 17 | 3 |
| 5 | 2000 | 2 | 1 |
| 6 | Transient Portion | WOT | 5 |
| 7 | 1500 | 12 | 3 |
| 8 | 2000 | 16 | 3 |
| 9 | 3000 | 17 | 3 |
| 10 | 2000 | 2 | 1 |
| 11 | Transient Portion | WOT | 5 |
| 12 | 1250 (cool down) | 2 | 4 |
| Total Stage Duration | | | 35 |

The Transient Portion of the Test Protocol consists of 10 accelerations in 300 seconds starting at 2000 and ending at 5000 rpm with a torque of 475 Nm.

Various parameters were logged every deci-second including Spark timing (CAD), Fuel flow rate (kg/h) and Brake Specific Fuel Consumption (BSFC) (g/kWh). The results are detailed below.

### Results

An advance of 0.7 CAD was established at 1500 rpm for THQ (Example 1) and NMA (Example 2) and an advance of 0.3 CAD was established at 3000 rpm for NMA (Example 2).

**Table 4 Effect of spark advance on fuel flow rate and brake specific fuel consumption (BSFC)**

| % Benefit over Comparative Example 1 | 1500 rpm | | 3000 rpm | |
|---|---|---|---|---|
| | Fuel flow | BSFC | Fuel flow | BSFC |
| Example 1 | 0.87 | 0.94 | 1.03 | 1.04 |
| Example 2 | 1.49 | 1.49 | 1.36 | 1.36 |

As can be seen from Table 4, the benefits of spark timing advance provided by methods of the present invention leads to benefits in fuel flow requirement and brake specific fuel consumption over the reference oil.

No benefit in spark timing, fuel flow requirement or brake specific fuel consumption was seen for Comparative Example 1 (reference oil) or for Comparative Example 2 (reference oil with the addition of solubilising agent Priolube 1940).

## Claims

1. Use of an aromatic amine in a lubricating composition for providing spark timing advance of a spark-ignited internal combustion engine wherein the lubricating composition comprises (i) base oil and (ii) from 3 to 20 wt% of the aromatic amine, wherein the aromatic amine is selected from aniline and alkyl- substituted aniline compounds, 1,2,3,4- tetrahydroquinoline, diphenylamine and alkyl-substituted diphenylamine compounds, 2-ethylhexyl-4-(dimethylamino)benzoate, indoline, N,N-dimethyl-1,4-phenylenediamine, o-toluidine, p-toluidine, p-anisidine, p-phenetidine, and mixtures thereof.

2. Use of an aromatic amine in a lubricating composition according to claim 1, wherein the aromatic amine is present in an amount of from 10 to 15 wt%.

3. Use of an aromatic amine in a lubricating composition according to claim 2, wherein the aromatic amine is 1,2,3,4-tetrahydroquinoline and is present in an amount of about 10 wt%.

4. Use of an aromatic amine in a lubricating composition according to claim 2, wherein the aromatic amine is N-methyl-aniline and is present in an amount of about 10 wt%.

5. Use of an aromatic amine in a lubricating composition according to any one of claims 1 to 4, wherein the spark timing advance provided is 0.5 or more crankshaft angle degrees measured as outlined in the description.

## Patentansprüche

1. Verwendung eines aromatischen Amins in einer Schmierzusammensetzung zum Bereitstellen eines Zündungseinstellungsvorlaufs eines funkengezündeten Verbrennungsmotors, wobei die Schmierzusammensetzung (i) Grundöl und (ii) 3 bis 20 Gew.-% des aromatischen Amins umfasst, wobei das aromatische Amin aus Folgendem ausgewählt ist: Anilin und Alkylsubstituierten Anilinverbindungen, 1,2,3,4-Tetrahydrochinolin, Diphenylamin und Alkylsubstituierten Diphenylaminverbindungen, 2-Ethylhexyl-4-(dimethylamino)benzoat, Indolin, N,N-Dimethyl-1,4-phenylendiamin, o-Toluidin, p-Toluidin, p-Anisidin, p-Phenetidin und Mischungen davon.

2. Verwendung eines aromatischen Amins in einer Schmierzusammensetzung nach Anspruch 1, wobei das aromatische Amin in einer Menge von 10 bis 15 Gew.-% vorhanden ist.

3. Verwendung eines aromatischen Amins in einer Schmierzusammensetzung nach Anspruch 2, wobei das aromatische Amin 1,2,3,4-Tetrahydrochinolin ist und in einer Menge von etwa 10 Gew.-% vorhanden ist.

4. Verwendung eines aromatischen Amins in einer Schmierzusammensetzung nach Anspruch 2, wobei das aromatische Amin N-Methylanilin ist und in einer Menge von etwa 10 Gew.-% vorhanden ist.

5. Verwendung eines aromatischen Amins in einer Schmierzusammensetzung nach einem der Ansprüche 1 bis 4, wobei der bereitgestellte Zündungseinstellungsvorlauf 0,5 oder mehr Kurbelwellenwinkelgrade beträgt, gemessen wie in der Beschreibung beschrieben.

## Revendications

1. Utilisation d'une amine aromatique dans une composition lubrifiante pour fournir une avance de calage à l'allumage d'un moteur à combustion interne à allumage commandé, la composition lubrifiante comprenant (i) une huile de base et (ii) de 3 à 20 % en poids de l'amine aromatique, l'amine aromatique étant choisie parmi l'aniline et les composés d'aniline substitués par un alkyle, la 1,2,3,4-tétrahydroquinoléine, la diphénylamine et les composés de diphénylamine substitués par un alkyle, le 2-éthylhexyl-4-(diméthylamino) benzoate, l'indoline, la N,N-diméthyl-1,4-phénylénédiamine, la o-toluidine, la p-toluidine, la p-anisidine, la p-phénétidine et leurs mélanges.

2. Utilisation d'une amine aromatique dans une composition lubrifiante selon la revendication 1, l'amine aromatique étant présente en une quantité de 10 à 15 % en poids.

3. Utilisation d'une amine aromatique dans une composition lubrifiante selon la revendication 2, l'amine aromatique étant la 1,2,3,4-tétrahydroquinoléine et étant présente en une quantité d'environ 10 % en poids.

4. Utilisation d'une amine aromatique dans une composition lubrifiante selon la revendication 2, l'amine aromatique étant la N-méthyl-aniline et étant présente en une quantité d'environ 10 % en poids.

5. Utilisation d'une amine aromatique dans une composition lubrifiante selon l'une quelconque des revendications 1 à 4, l'avance de calage à l'allumage fournie étant de 0,5 degré ou plus d'angle de vilebrequin, mesuré comme décrit dans la description.
